# FASCICULE DE BREVET EUROPEEN

(11) **EP 2 001 739 B1**
(45) Date de publication et mention de la délivrance du brevet: **30.06.2010**
(21) Numéro de dépôt: 07731683.4
(22) Date de dépôt: 01.03.2007
(51) Int. Cl.: B64C 3/48

(54) **PROFIL AERODYNAMIQUE OU HYDRODYNAMIQUE POUVANT ÊTRE DEFORME DE MANIERE CONTINUE ET CONTROLEE**
AERODYNAMISCHES ODER HYDRODYNAMISCHES PROFIL, DAS KONTINUIERLICH UND KONTROLLIERT VERFORMT WERDEN KANN
AERODYNAMIC OR HYDRODYNAMIC PROFILE WHICH CAN BE DEFORMED IN A CONTINUOUS AND CONTROLLED MANNER

(30) Priorité: 27.03.2006 FR 0651048
(43) Date de publication de la demande: 17.12.2008
(73) Titulaire: Cetim-Cermat (Association), 68200 Mulhouse (FR)
(72) Inventeur: MEYER, Georges, F-68400 Riedisheim (FR); LAURENT, Fabrice, F-68800 Leimbach (FR); MAUPOINT, Cédric, F-68500 Guebwiller (FR); DROBEZ, Hervé, F-68100 Mulhouse (FR); L'HOSTIS, Gildas, F-68170 Rixheim (FR); DURAND, Bernard, F-68120 Pfastatt (FR)
(74) Mandataire: Nuss, Pierre
(86) Numéro de dépôt international: PCT/FR2007/050866
(87) Numéro de publication internationale: WO 2007/110518

(56) Documents cités:
- EP-A2- 0 905 019
- EP-A2- 0 989 057
- WO-A2-2005/084936
- US-A- 3 893 639
- US-A- 5 367 970

## Description

La présente invention concerne le domaine des profils aérodynamiques ou hydrodynamiques, et notamment celui des profils aptes à se déformer pour adapter leur forme par rapport aux conditions d'utilisation, de manière à obtenir une trajectoire spécifique ou une meilleure pénétration dans le fluide, par exemple. Ledit fluide peut, bien entendu, être à l'état de gaz, de vapeur ou de liquide.

L'invention concerne plus particulièrement un profil aérodynamique ou hydrodynamique pouvant être déformé de manière continue et contrôlée.

Il existe de nombreux types de profils, dont la forme peut être modifiée. Ainsi, le document EP 0 958 999 décrit un profil aérodynamique, dont le bord de fuite peut pivoter autour d'un axe par l'intermédiaire d'un actionneur mécanique linéaire. Or, ce type d'actionneur a pour inconvénient d'être encombrant, volumineux et de présenter un poids relativement élevé, de sorte que son implantation n'est ni aisée, ni optimale dans des profils minces et/ou légers.

Le document WO 2004/069651 décrit, quant à lui, un profil aérodynamique déformable par l'intermédiaire d'actionneurs piézoélectriques. Or, ce type d'actionneurs ne permet pas d'obtenir de grands mouvements ou des déformations importantes et nécessite souvent l'intégration d'un amplificateur mécanique, ce qui a pour conséquence la nécessité d'un apport d'énergie, une structure alourdie, plus volumineuse et également plus coûteuse.

Le brevet américain US-A-5 367 970 concerne un profil aérodynamique ou hydrodynamique déformable essentiellement constitué par une enveloppe montée sur une infrastructure présentant une âme longitudinale. Dans ce profil, l'âme comporte une section active qui induit, en se déformant par variation de la température, la déformation du profil proprement dit.

La demande européenne EP-A2-0 989 057 décrit un dispositif pour une aile porteuse d'avion destinée à en modifier la forme grâce à un support de tension élastiquement déformable et au moins un mécanisme de commande par câble agissant notamment sur des éléments prétendus de ladite aile.

Il existe encore des dispositifs utilisant des alliages à mémoire de forme en tant qu'actionneurs permettant de déplacer des volets disposés sur des profils aérodynamiques. Or, ces dispositifs ne sont pas progressifs, c'est-à-dire qu'ils ne permettent pas d'obtenir un déplacement ou une déformation progressifs et réversibles.

L'invention a pour but de pallier les inconvénients précités et plus particulièrement de fournir un profil ou profilé aérodynamique ou hydrodynamique pouvant être déformé de manière continue et contrôlée, et présentant une structure simple et légère. En outre, le profil devra consommer une faible quantité d'énergie. De manière additionnelle, ledit profil devra également présenter une surface extérieure ou enveloppe totalement étanche et dont la paroi extérieure ne forme pas de pli lors de la déformation du profil.

A cet effet, l'invention a pour objet un profil aérodynamique ou hydrodynamique selon la revendication 1.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue schématique en perspective d'un profil selon l'invention ;
la figure 2 est une vue en coupe d'une flèche d'un profil selon l'invention à l'état non déformé et à l'état déformé ;
la figure 3 est une vue partielle arrachée en perspective représentant un profil muni de dispositifs de verrouillage à l'état déformé, et
la figure 4 est une vue en coupe d'un détail de l'enveloppe du profil selon l'invention.

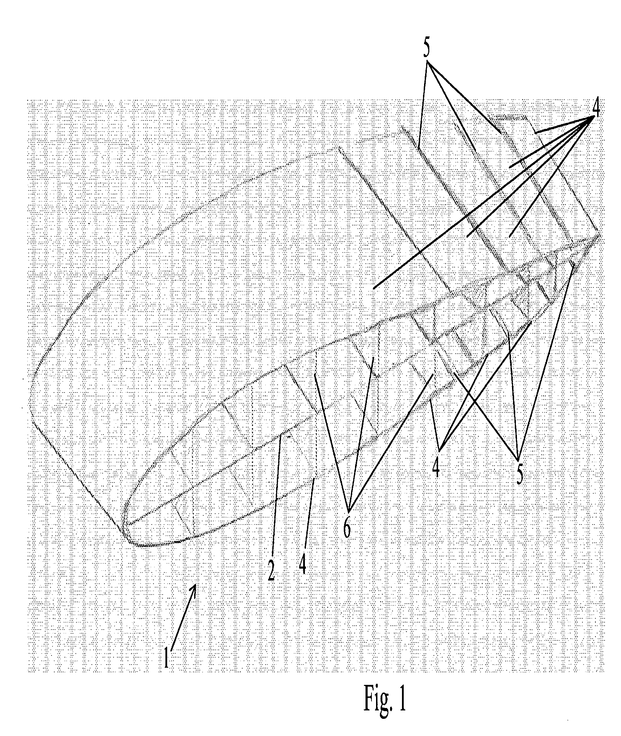

Les figures 1 à 4 des dessins annexés représentent un profil 1 aérodynamique ou hydrodynamique selon l'invention pouvant être déformé de manière continue et contrôlée, essentiellement constitué par une enveloppe montée sur une infrastructure. De manière caractéristique, ladite infrastructure présente une âme 2 s'étendant suivant l'axe longitudinal de la section transversale du profil 1 et cette âme 2 comporte au moins une section active en matériau composite à déformation continue et contrôlée sous l'effet d'une variation de température réglable d'au moins une couche active dudit matériau composite induisant, dans les zones de l'enveloppe du profil 1 correspondant à ladite section active, une déformation de direction et d'amplitude correspondantes.

Grâce à l'invention, il est possible de réaliser un profil 1 dont la déformation est à la fois ciblée aux zones de son enveloppe disposées au niveau d'une section active. Cela a pour avantage d'adapter très facilement un tel profil 1 en fonction de son utilisation et des conditions de cette dernière.

Les zones actives disposées au niveau de l'âme 2 du profil 1 sont utilisées pour déformer ce dernier. Le fait de positionner lesdites zones actives sur l'âme 2 permet d'isoler ces dernières des perturbations thermiques environnantes, ce qui a pour effet qu'elles ne subissent que les effets d'une variation de température contrôlée.

Ces zones actives peuvent présenter une structure identique à celle du matériau composite décrit dans la demande de brevet français n° 04 02163 au nom de la déposante. Elles peuvent, par exemple, être stratifiées.

Le matériau composite peut être du type multicouche et peut être constitué de résines et de fibres.

Selon l'invention, chaque section active de l'âme 2 peut présenter au moins une couche inactive présentant des caractéristiques de dilatation différentes de celles de la ou des couches actives de la section active concernée. Le fait d'utiliser des matériaux présentant des caractéristiques de dilatation différentes permet d'obtenir une déformation de la zone active, de l'âme 2, et donc du profil 1.

En fonction des matériaux utilisés pour réaliser les zones actives et selon leur coefficient de dilatation, il est possible de relier au moins une section active de l'âme 2 à une source de chauffage ou à une source de refroidissement. Bien entendu, dans le cas où le profil 1 comporte plusieurs zones actives, ces dernières peuvent être, soit toutes reliées à une source de chauffage, soit toutes reliées à une source de refroidissement, soit certaines peuvent être reliées à une source de chauffages et les autres à une source de refroidissement. Il est aussi possible de relier une ou plusieurs sections actives de l'âme 2 à la fois à une source de chauffage et à une source de refroidissement, de manière à obtenir une régulation plus fine et plus rapide de la déformation.

La liaison des sections actives de l'âme 2 à une source peut être réalisée sans connexion physique. Il est ainsi possible, par exemple, d'activer une section active en utilisant des ondes, par exemple des ondes à haute fréquence telles que des micro-ondes.

Dans le cas d'une connexion physique, il peut être envisagé d'utiliser une ou plusieurs couches actives conductrices réalisées en un matériau conducteur d'électricité et reliées de manière filaire à une ou plusieurs sources électriques à puissance réglable, la ou les couches inactives pouvant être en un matériau non conducteur électrique mais conducteur thermique.

En ce qui concerne la ou les sources de refroidissement, ces dernières peuvent, par exemple, se présenter sous la forme d'une ou de plusieurs buses projetant un flux d'air en direction d'une ou plusieurs sections actives de l'âme 2.

Dans les deux cas, cette source peut être commandée par un dispositif de régulation prenant en compte un certain nombre de variables, telles que la pression exercée sur le profil 1, son orientation ou la trajectoire à suivre, pour commander la source, de telle sorte qu'elle entraîne une variation de température correspondant à la déformation souhaitée du profil 1. Ainsi, le profil 1 est rendu intelligent et régule sa forme de manière automatique.

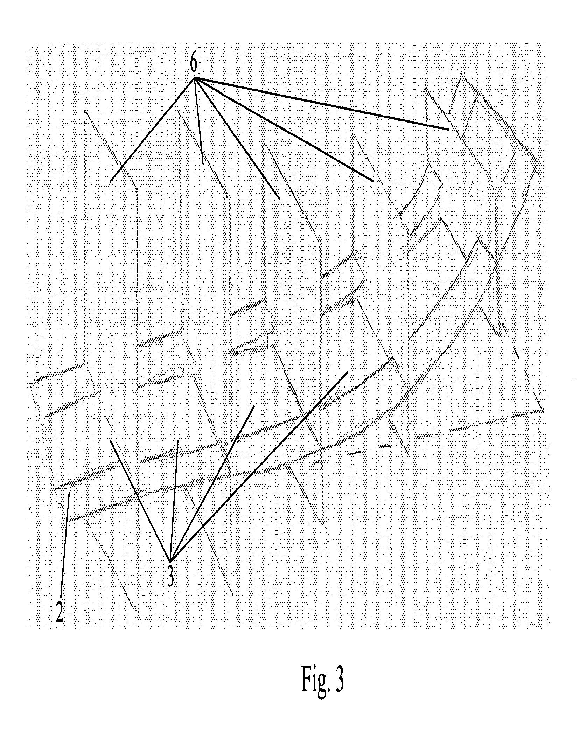

Selon un avantage de l'invention, et comme représenté schématiquement à la figure 3, le profil 1 peut comprendre un dispositif de verrouillage 3 de sa position déformée, de sorte que l'on économise l'énergie nécessaire au maintien du profil 1 dans sont état déformé et que l'on aboutit à des coûts d'utilisation relativement faibles. En d'autres termes, ce dispositif de verrouillage 3 permet de figer le profil 1 dans une position déformée sans que les zones actives ne soient alimentées.

Ce dispositif de verrouillage 3 peut être du type à verrouillage automatique et continu, lors de la déformation du profil 1 et déverrouillable par un dispositif d'actionnement.

Ainsi, pour déformer un profil 1 selon l'invention, il faut d'abord faire varier la température de la ou des couches actives de la ou des zones actives de l'âme 2. Au fur et à mesure que le profil 1 se déforme, le dispositif de verrouillage 3 prend différentes positions de verrouillage. Lorsque le profil 1 a atteint la déformation souhaitée et que sa déformation est stoppée, il est maintenu dans cet état de déformation par le dispositif de verrouillage 3. A ce stade, il n'est donc plus nécessaire de maintenir l'alimentation ou l'activation de la ou des couches actives pour que le profil 1 conserve cette position.

Dans les cas où le profil 1 présente des couches actives aptes à se déformer dans deux directions, il est préférable de mettre en place dans un tel profil 1 deux dispositifs de verrouillage 3, chacun de ces derniers étant alors destiné à verrouiller le profil 1 lors d'une déformation dans une des deux directions.

De manière caractéristique, et selon une variante de réalisation de l'invention non représentée, le dispositif de verrouillage 3 peut comporter une crémaillère engrenant avec les dents d'une roue libre dentée. Ainsi, au fur et à mesure de la déformation du profil 1, une autre dent est engrenée et la position déformée correspondante est verrouillée.

Selon une autre variante non représentée, le dispositif de verrouillage 3 peut comporter une roue à rochet et un cliquet.

Selon l'invention, le dispositif d'actionnement peut être une section active d'un matériau composite à déformation continue et contrôlée sous l'effet d'une variation de température réglable d'au moins une couche active dudit matériau composite, ladite section active induisant une déformation contrôlée du dispositif de verrouillage 3 en fonction de ladite variation de température, entraînant ce dernier hors de sa position de verrouillage pour une autre position de verrouillage ou dans sa position déverrouillée.

En contrôlant la vitesse de déformation du dispositif d'actionnement, il est donc possible de contrôler également le retour en position initiale, c'est-à-dire non déformée du profil 1, ou son retour dans une position intermédiaire.

En variante, le dispositif d'actionnement peut être réalisé à partir de matériaux actifs traditionnels, tels que les alliages à mémoire de forme, les éléments piézoélectriques ou magnétostrictifs.

Dans tous les cas, la rigidité des dispositifs de verrouillage 3 doit être adaptée pour supporter les efforts engendrés par le blocage et les frottements de l'âme 2.

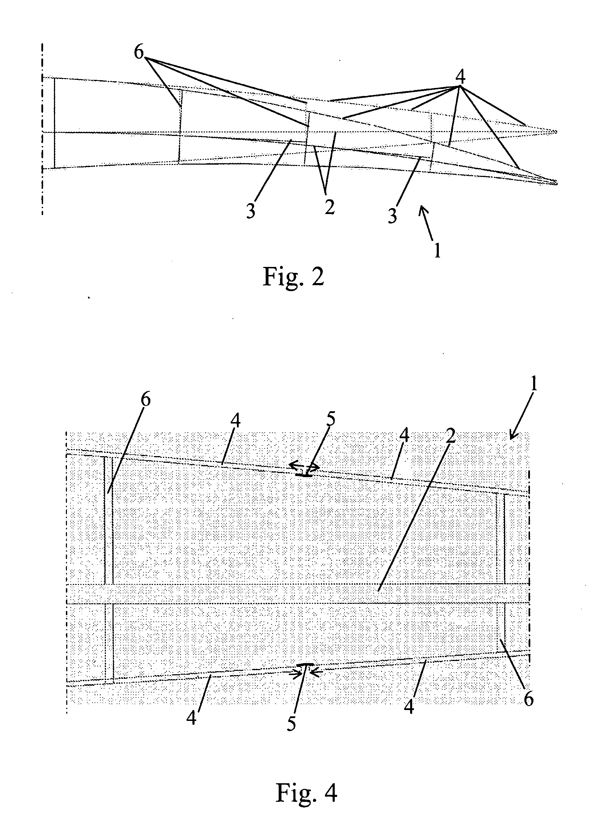

Selon une caractéristique de l'invention représentée à la figure 4, l'enveloppe du profil 1 peut être recouverte par une pluralité de peaux 4 juxtaposées les unes aux autres, un joint 5 étant disposé au niveau des interfaces entre lesdites peaux 4, sous ces dernières. Ce joint 5 peut avantageusement se présenter sous la forme d'une membrane précontrainte élastiquement déformable. Une telle disposition permet d'améliorer et d'amplifier la déformation du profil 1 tout en autorisant le glissement desdites peaux 4 les unes par rapport aux autres et en assurant une étanchéité dudit profil 1.

Afin de pallier les problèmes des contraintes dues à la déformation du profil 1 (contrainte de traction sur l'extrados, contrainte de compression sur l'intrados), l'infrastructure peut être constituée par des renforts 6 montés perpendiculairement à l'âme 2, sur cette dernière et de part et d'autre de cette dernière et s'étendant jusqu'à l'enveloppe du profil 1 et en ce que lesdites peaux 4 sont à chaque fois juxtaposées entre deux renforts 6 consécutifs.

L'écartement entre deux peaux 4 peut être d'environ un millimètre, ce qui représente une distance faible au regard du profil 1, et n'a donc pas pour effet de perturber l'écoulement du fluide sur ledit profil 1. En outre, les joints 5 assurent l'étanchéité.

L'âme 2 associée aux renforts 6 sert ainsi de squelette. Le nombre de renforts 6 est défini lors de la conception et varie en fonction des conditions d'utilisation (taille de la structure, vitesse de l'écoulement et altitudes de vol prévues dans le cas d'une aile).

Le profil 1 général et les dimensions de l'aile sont variables. Ils sont liés à l'aérodynamisme et à la structure principale.

Grâce à l'invention, il est possible de réaliser un profil 1, dont la forme ou géométrie peut être modifiée pour s'adapter aux conditions d'utilisation : vitesse, nature de l'écoulement.

Dans le domaine aéronautique, les mécanismes existants, tels que les volets pivotants et rétractables qui se trouvent sur le bord de fuite des ailes d'avion peuvent ainsi être supprimés et il n'est plus nécessaire d'installer des mécanismes comportant des vérins, des systèmes hydrauliques ou des moteurs dans les profils 1 pour assurer leur déformation, de sorte qu'on aboutit à une structure simplifiée et légère.

Ce type de profil 1 selon l'invention présentant une structure légère et déformable peut être utilisée pour les ailes des drones, c'est-à-dire des avions sans pilotes qui doivent pouvoir voler à basse vitesse tout en restant discrets. Elle pourra concerner aussi les avions standard civils ou militaires dans le cadre d'une recherche de légèreté croissante des structures.

Un tel profil 1 peut également être utilisé pour réaliser une aile, dont la déformation permet de faire varier le coefficient de pression Cp sur l'intrados et l'extrados. On vérifie par le calcul que les pressions sur le bord de fuite sont faibles par rapport aux forces engendrées par la déformation de l'âme 2 active. Cela signifie que l'aile a une résistance suffisante pour résister aux fluctuations de pression extérieures.

Ainsi, comme cela est représenté sur la figure 2, avec une couche active de 450 mm de longueur (environ la moitié du profil 1), des essais ont montré qu'il est possible d'obtenir une flèche de 40 à 45 mm à l'extrémité. Les calculs permettent de déterminer la composition optimale du stratifié pour obtenir le maximum de déformée pour une puissance de 2,5 kW/m² durant 2 minutes.

Le profil 1 selon l'invention peut, bien entendu, concerner une aile ou une pale pouvant être intégrée à toute structure aéronautique ou hydraulique (avion, navette, drone, structure volante, pale d'éolienne, pale de turbine, pale d'hélicoptère).

Bien entendu, l'invention n'est pas limitée au mode de réalisation décrit et représenté aux dessins annexés. Des modifications restent possibles sans sortir du cadre de l'invention tel que défini par les revendications.

## Revendications

1. Profil aérodynamique ou hydrodynamique pouvant être déformé de manière continue et contrôlée, essentiellement constitué par une enveloppe montée sur une infrastructure,
ladite infrastructure présentant une âme (2) s'étendant suivant l'axe longitudinal de la section transversale du profil (1), **caractérisé en ce que** cette âme (2) comporte au moins une section active en matériau composite à déformation continue et contrôlée sous l'effet d'une variation de température réglable d'au moins une couche active dudit matériau composite induisant, dans les zones de l'enveloppe du profil (1) correspondant à ladite section active, une déformation de direction et d'amplitude correspondantes.

2. Profil, selon la revendication 1, **caractérisé en ce que** chaque section active de l'âme (2) présente au moins une couche inactive présentant des caractéristiques de dilatation différentes de celles de la ou des couches actives de la section active concernée.

3. Profil, selon l'une quelconque des revendications 1 et 2, **caractérisé en ce qu'**au moins une section active de l'âme (2) est reliée à une source de chauffage.

4. Profil, selon l'une quelconque des revendications 1 à 3, **caractérisé en ce qu'**au moins une section active de l'âme (2) est reliée à une source de refroidissement.

5. Profil, selon l'une quelconque des revendications 1 à 4, **caractérisé en ce qu'**il comprend un dispositif de verrouillage (3) de la position déformée dudit profil (1).

6. Profil, selon la revendication 5, **caractérisé en ce que** le dispositif de verrouillage (3) est du type à verrouillage automatique et continu lors de la déformation du profil (1) et est déverrouillable par un dispositif d'actionnement.

7. Profil, selon la revendication 6, **caractérisé en ce que** le dispositif de verrouillage (3) comporte une crémaillère engrenant les dents d'une roue libre dentée.

8. Profil, selon la revendication 6, **caractérisé en ce que** le dispositif de verrouillage (3) comporte une roue à rochet et un cliquet.

9. Profil, selon l'une quelconque des revendications 6 à 8, **caractérisé en ce que** le dispositif d'actionnement est une section active d'un matériau composite à déformation continue et contrôlée sous l'effet d'une variation de température réglable d'au moins une couche active dudit matériau composite, ladite section active induisant une déformation contrôlée du dispositif de verrouillage (3) en fonction de ladite variation de température, entraînant ce dernier hors de sa position de verrouillage pour une autre position verrouillage ou dans sa position déverrouillée.

10. Profil, selon l'une quelconque des revendications 1 à 9, **caractérisé en ce que** l'enveloppe dudit profil (1) est recouverte par une pluralité de peaux (4) juxtaposées les unes aux autres, un joint (5) étant disposé au niveau des interfaces entre lesdites peaux (4), sous ces dernières.

11. Profil, selon la revendication 10, **caractérisé en ce que** l'infrastructure est constituée par des renforts (6) montés perpendiculairement à l'âme (2), sur cette dernière et de part et d'autre de cette dernière et s'étendant jusqu'à l'enveloppe du profil (1) et **en ce que** lesdites peaux (4) sont à chaque fois juxtaposées entre deux renforts (6) consécutifs.

## Claims

1. Aerodynamic or hydrodynamic profile that can be deformed in a continuous and controlled manner, essentially consisting of a shell mounted on an infrastructure, said infrastructure comprising a core (2) extending along the longitudinal axis of the cross section of the profile (1), **characterised in that** the core (2) has at least one active section made of composite material for continuous and controlled deformation under the effect of an adjustable variation in the temperature of at least one active layer of the composite material, which, in the regions of the shell of the profile (1) corresponding to the active section, induces a deformation of corresponding direction and amplitude.

2. Profile according to claim 1, **characterised in that** each active section of the core (2) comprises at least one inactive layer having expansion characteristics different from those of the active layer or layers of the active section concerned.

3. Profile according to any one of claims 1 and 2, **characterised in that** at least one active section of the core (2) is connected to a heat source.

4. Profile according to any one of claims 1 to 3, **characterised in that** at least one active section of the core (2) is connected to a cooling source.

5. Profile according to any one of claims 1 to 4, **characterised in that** it comprises a device (3) for locking the deformed position of the said profile (1).

6. Profile according to claim 5, **characterised in that** the locking device (3) is the type that automatically and continuously locks during the deformation of the profile (1) and can be unlocked by an actuating device.

7. Profile according to claim 6, **characterised in that** the locking device (3) comprises a rack engaging the teeth of a toothed free wheel.

8. Profile according to claim 6, **characterised in that** the locking device (3) comprises a ratchet wheel and a catch.

9. Profile according to any one of claims 6 to 8, **characterised in that** the actuating device is an active section made of a composite material having continuous and controlled deformation under the effect of an adjustable variation in temperature in at least one active layer of the composite material, whereby the active section induces a controlled deformation of the locking device (3) as a function of the said temperature variation, driving the latter out of its locking position into another locking position or into its unlocked position.

10. Profile according to any one of claims 1 to 9, **characterised in that** the shell of said profile (1) is covered by a number of skins (4) placed side by side, whereby a seal (5) is located at the interfaces between said skins (4), under the latter.

11. Profile according to claim 10, **characterised in that** the infrastructure consists of support pieces (6) mounted perpendicularly to the core (2), on the latter and on either side of the latter and extending to the shell of the profile (1), and **in that** said skins (4) are each juxtaposed between two consecutive support pieces (6).

## Patentansprüche

1. Aerodynamisches oder hydrodynamisches Profil, das in kontinuierlicher und steuerbarer Weise verformbar ist, und das im Wesentlichen durch eine Umhüllung gebildet ist, die auf einer Infrastruktur aufmontiert ist, wobei die Infrastruktur einen Kernsteg (2) aufweist, der sich entlang einer Längsachse des Querschnittes des Profils (1) erstreckt,
**dadurch gekennzeichnet, dass** der genannte Kernsteg (2) zumindest einen aktiven Abschnitt aus einem Verbundmaterial mit kontinuierlicher und steuerbarer Verformung unter der Wirkung einer regelbaren Änderung der Temperatur von zumindest einer Schicht des Verbundmaterials umfasst, die in den Zonen der Umhüllung des Profils (1), die diesem aktiven Abschnitt entsprechen, eine Verformung mit einer Richtung und entsprechenden Amplituden hervorruft.

2. Profil nach Anspruch 1, **dadurch gekennzeichnet, dass** jeder aktive Abschnitt des Kernstegs (2) zumindest eine inaktive Schicht aufweist, die Wärmedehnungseigenschaften aufweist, die von denen der aktiven Schicht oder der aktiven Schichten des betreffenden aktiven Abschnittes verschieden sind.

3. Profil nach einem der Ansprüche 1 und 2, **dadurch gekennzeichnet, dass** zumindest ein aktiver Abschnitt des Kernstegs (2) mit einer Heizquelle verbunden ist.

4. Profil nach einem der Ansprüche 1 bis 3, **dadurch gekennzeichnet, dass** zumindest ein aktiver Abschnitt des Kernstegs (2) mit einer Kühlquelle verbunden ist.

5. Profil nach einem der Ansprüche 1 bis 4, **dadurch gekennzeichnet, dass** es eine Verriegelungsvorrichtung (3) für die verformte Position des Profils (1) aufweist.

6. Profil nach Anspruch 5, **dadurch gekennzeichnet, dass** die Verriegelungsvorrichtung (5) vom Typ einer automatischen und kontinuierlichen Verriegelung bei einer Verformung des Profils (1) ist und durch eine Betätigungsvorrichtung entriegelbar ist.

7. Profil nach Anspruch 6, **dadurch gekennzeichnet, dass** die Verriegelungsvorrichtung (3) eine Zahnstange aufweist, die mit den Zähnen eines Freilaufzahnrades kämmt.

8. Profil nach Anspruch 6, **dadurch gekennzeichnet, dass** die Verriegelungsvorrichtung (3) ein Sperrzahnrad und eine Sperrklinke umfasst.

9. Profil nach einem der Ansprüche 6 bis 8, **dadurch gekennzeichnet, dass** die Betätigungsvorrichtung ein aktiver Abschnitt eines Verbundmaterials mit einer unter der Wirkung einer regelbaren Temperaturänderung zumindest einer aktiven Schicht des Verbundmaterials kontinuierlichen und steuerbaren Verformung ist, wobei der aktive Abschnitt in Abhängigkeit von der genannten Temperaturänderung eine gesteuerte Verformung der Verriegelungsvorrichtung (3) hervorruft und diese aus ihrer Verriegelungsposition heraus für eine andere Verriegelungsposition oder in deren Entriegelungsposition antreibt.

10. Profil nach einem der Ansprüche 1 bis 9, **dadurch gekennzeichnet, dass** die Umhüllung des Profils 1 durch eine Vielzahl von Abdeckungen oder Häuten (4) bedeckt ist, die nebeneinander angeordnet sind, wobei eine Dichtung (5) im Bereich der Grenzflächen zwischen den Abdeckungen oder Häuten (4) unterhalb von diesen angeordnet ist.

11. Profil nach Anspruch 10, **dadurch gekennzeichnet, dass** die Infrastruktur durch Verstärkungen (6) gebildet ist, die senkrecht zu dem Kernsteg (2) auf diesem und auf beiden Seiten des letzteren angeordnet sind und sich bis zur Umhüllung des Profils (1) erstrecken, und dass die Abdeckungen oder Häute (4) jeweils nebeneinander zwischen zwei aufeinander folgenden Verstärkungen (6) angeordnet sind.
